Europäisches Patentamt

European Patent Office

Office européen des brevets

(19)

(11) Veröffentlichungsnummer: **0 205 093**
**A2**

(12) # EUROPÄISCHE PATENTANMELDUNG

(21) Anmeldenummer: 86107611.5

(22) Anmeldetag: 04.06.86

(51) Int. Cl.⁴: **F 16 L 39/02**
**B 29 C 33/00, H 01 R 23/02**

(30) Priorität: 13.06.85 DE 3521298
13.06.85 DE 3521267

(43) Veröffentlichungstag der Anmeldung:
17.12.86 Patentblatt 86/51

(84) Benannte Vertragsstaaten:
BE DE FR GB IT LU NL

(71) Anmelder: APPLIED POWER INC.
P.O.Box 325
Milwaukee Wisconsin 53201(US)

(72) Erfinder: Nijzink, Harm
Utrechtseweg 215
NL-3818 EE Amersfoort(NL)

(72) Erfinder: Bolderman, Dirk Cornelis
Diakenhove 4
NL-3834 XS Leusden(NL)

(72) Erfinder: Van Laar, Gert-Jan
Kamperfoeliestraat 75
NL-3765 AW Soest(NL)

(74) Vertreter: Franke, Karl Wilhelm, Dr.
Steinsdorfstrasse 10
D-8000 München 22(DE)

(54) Mehrfachkupplungsanordnung.

(57) Bei einer Mehrfachkupplungsanordnung, die zum glechzeitigen Verbinden bzw. Trennen der Enden einer Vielzahl von einander zugeordneten elektrischen und/oder Flüssigkeit und/oder Gas führenden Leitungen insbesondere im Zuge des Formenaustauschs bei einer Spritzgießmaschine bestimmt ist und zwei einander gegenüberstehende Trägerplatten aufweist, die jede die Enden jeweils einer Leitung aller miteinander zu verbindenden Leitungspaare in paßgerechter gegenseitiger Zuordnung enthalten und von denen wenigstens die eine Trägerplatte (21) relativ zur anderen Trägerplatte (22) auf wenigstens zwei Führungsstangen durch wenigstens einen Stellkolben senkrecht zu ihrer Ebene axial verschiebbar geführt ist, ist zur Verminderung der im Zuge des Formenaustausches erforderlichen Arbeitsgänge entweder an der Kolbenstange oder an den Führungsstangen eine hydraulisch betätigbare Verriegelung zum zeitweiligen Festlegen der verschiebbaren Trägerplatte relativ zur feststehenden Trägerplatte an einer frei wählbaren Hubstellung entlang des axialen Verstellweges für die verschiebbare Trägerplatte vorgesehen.

Fig. 1

Croydon Printing Company Ltd.

Pe 115/704 Dr.F/F

APPLIED POWER INC.
Milwaukee, Wisconsin 53201 (V.St.A.)


Mehrfachkupplungsanordnung


Die Erfindung betrifft eine Mehrfachkupplungsanordnung zum gleichzeitigen Verbinden bzw. Trennen der Enden einer Vielzahl von einander zugeordneten elektrischen und/oder Flüssigkeit und/oder Gas führenden Leitungen an zwei beweglichen Maschinenteilen mit zwei einander gegenüberstehenden Trägerplatten, die jede die Enden jeweils einer Leitung aller miteinander zu verbindenden Leitungspaare in paßgerechter gegenseitiger Zuordnung enthalten und von denen wenigstens eine relativ zur anderen auf wenigstens zwei Führungsstangen durch wenigstens einen Stellkolben senkrecht zu ihrer Ebene axial verschiebbar geführt ist.

Mehrfachkupplungsanordnungen dieser Art dienen insbesondere zum Anschließen einer Vielzahl von Leitungen, die zur Versorgung von Formhälften in einer Spritzgießmaschine mit Kühlmittel oder sonstigen Fluiden und zur Abnahme von elektrischen Meßsignalen erforderlich sind. Zum Zusammenhalten solcher Formhälften ist meist eine hydraulisch betätigbare Verriegelung vorgesehen, und auch die Trägerplatten der bekannten Mehrfachkupplungsanordnungen lassen sich mit Hilfe hydraulischer Mittel zusammenbringen. Für ihr Zusammenhalten im Betrieb ist dannjedoch eine mechanische Verriegelung vorgesehen, die gesondert betätigt werden muß.

Ein derartiger Aufbau ist jedoch zum einen aufwendig in der Herstellung und zum anderen umständlich im Betrieb und erhöht den für einen Formenwechsel erforderlichen Arbeits- und Zeitaufwand erheblich, da dazu eine unerwünscht große Anzahl von Einzelvorgängen durchzuführen ist.

Der Erfindung liegt daher die Aufgabe zugrunde, eine Mehrfachkupplungsanordnung der eingangs erwähnten Art zu schaffen, die sich
zum einen einfach und kostengünstig herstellen läßt und zum anderen
die Anzahl der im Zuge des Austausches von Maschinenteilen wie den
Formhälften in einer Spritzgießmaschine erforderlichen Arbeitsgänge
vermindert.

Die gestellte Aufgabe wird gemäß der Erfindung dadurch gelöst,
daß entweder am Stellkolben bzw. an seiner Kolbenstange oder an den
Führungsstangen eine hydraulisch betätigbare bzw. lösbare und an
beliebiger Stelle des axialen Verstellweges für die verschiebbare
Trägerplatte aktivierbare Verriegelung zum zeitweiligen Festlegen
der verschiebbaren Trägerplatte relativ zur feststehenden Trägerplatte vorgesehen ist.

Die erfindungsgemäße Ausbildung der Mehrfachkupplungsanordnung
gestattet es, die verschiebbare Trägerplatte an jeder beliebigen
Stelle ihres Hubweges mit Hilfe ihres hydraulischen Stellantriebes
zu arretieren, wobei außerdem der Stellvorgang und der Verriegelungsvorgang in ihrer Durchführung zwangsweise miteinander kombiniert
werden können, was im Ergebnis die Betriebssicherheit erhöht und
den Arbeitsablauf beschleunigt.

Vorteilhafte Ausgestaltungen und Weiterbildungen der Erfindung
ergeben sich im einzelnen aus den Unteransprüchen; dabei ist insbesondere auf die vorteilhafte Gestaltung der Verriegelung mit
durch Selbsthemmung zusammenhaltenden Keilflächen an einem Klemmkolben und einer Klemmhülse hinzuweisen, die sich hydraulisch
zusammenfahren lassen, und ebenso von Vorteil ist die Integration
der Kupplungsanordnung in ihren beweglichen Teilen mit den hydraulischen Halteeinrichtungen zum Zusammenfügen der Maschinenteile
selbst, die zudem die Möglichkeit eines koordinierten Betriebs mit
aufeinander abgestimmter Versorgung der verschiedenen Einrichtungen
mit Hydraulikfluid für die einzelnen Stell- und Verriegelungsvorgänge eröffnet.

Für die weitere Erläuterung der Erfindung und ihrer Vorteile
soll nunmehr auf die Zeichnung Bezug genommen werden, in der bevorzugte Ausführungsbeispiele für die Erfindung veranschaulicht
sind; dabei zeigen in der Zeichnung:

Fig. 1 eine Draufsicht auf ein Teilstück einer mit Mehrfachkupplungsanordnungen gemäß der Erfindung für den Anschluß zweier Formhälften ausgerüsteten Spritzgießmaschine,

Fig. 2 und 3 zwei Möglichkeiten für die Integration einer
Mehrfachkupplungsanordnung gemäß der Erfindung in den
Aufbau der Festlegeeinrichtungen zum Festhalten der
Formhälften in der Spritzgießmaschine von Fig. 1 aneinander und

Fig. 4 ein bevorzugtes Ausführungsbeispiel für die Ausbildung
der Verstell- und Verriegelungsmittel für eine Mehrfachkupplungsanordnung gemäß der Erfindung.

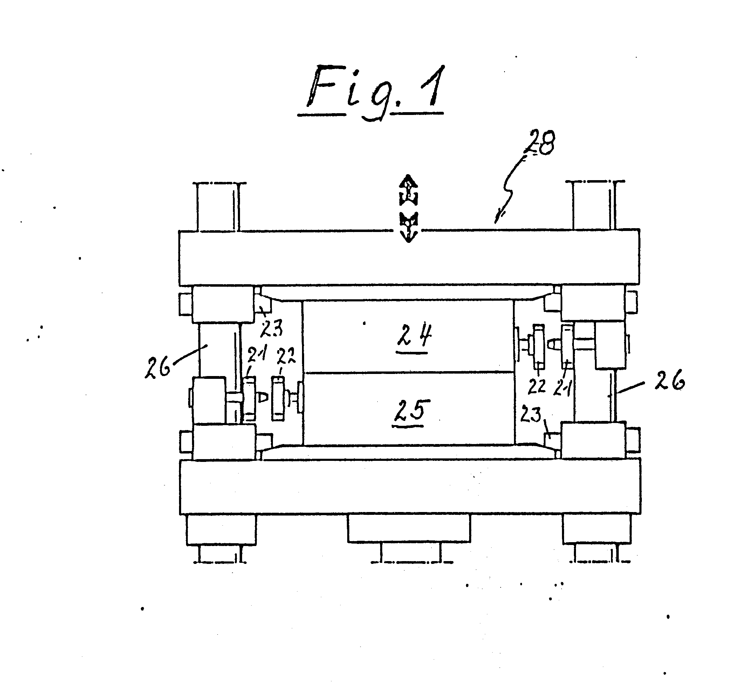

Die in Fig. 1 auszugsweise gezeigte Spritzgießmaschine enthält
in einem Gestell 28 zwei Formhälften 24 und 25, die darin mit Hilfe
von paarweise arbeitenden Stellantrieben 23 mit hydraulischer Betätigung in einer vorgegebenen Lage zueinander festgehalten sind.
Diese Stellantriebe 23 sind jeweils paarweise auf je einem von
zwei einander gegenüberstehenden Gehäusen 26 angebracht, und diese
Gehäuse 26 dienen gleichzeitig auch als Träger für je eine Mehrfachkupplungsanordnung gemäß der Erfindung, von denen in Fig. 1 jeweils
nur eine mit den Formhälften 24 bzw. 25 verbundene feststehende
Trägerplatte 22 und eine zugeordnete bewegliche Trägerplatte 21
gezeigt sind, die jeweils senkrecht zu ihrer Ebene auf die entsprechende feststehende Trägerplatte 22 zu oder davon weg bewegt
werden kann, um die einander zugeordneten Leitungsenden miteinander
in Verbindung zu bringen oder voneinander zu trennen.

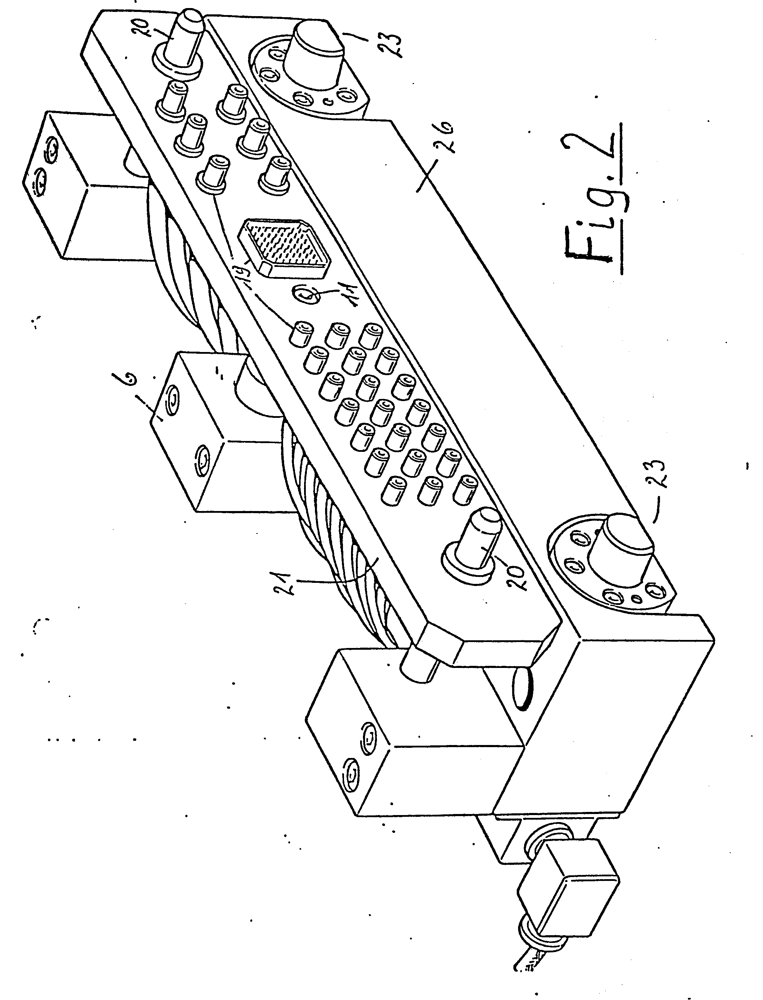

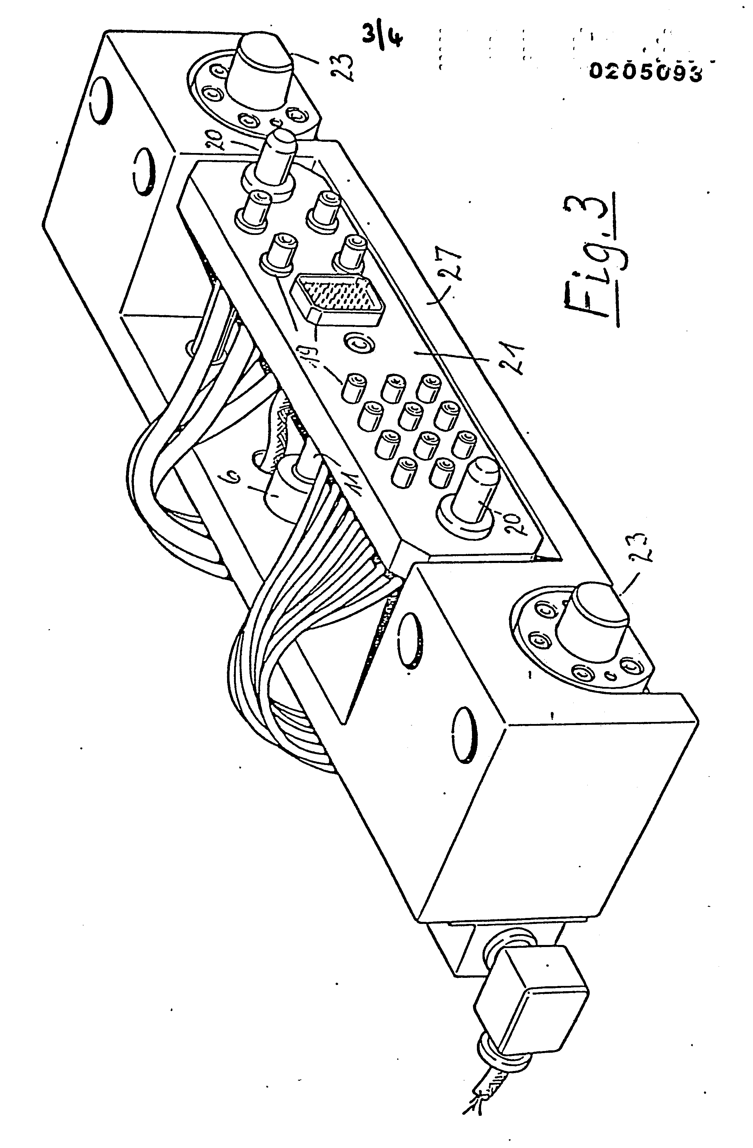

Mehr Einzelheiten für die Ausbildung der beweglichen Trägerplatten 21 sind aus den Darstellungen in Fig. 2 und 3 ersichtlich,
die zugleich zwei Möglichkeiten für eine Kombination der beweglichen
Trägerplatte 21 samt ihrer Führungs- und Verstelleinrichtungen mit
einem die Stellantriebe 23 aufnehmenden Gehäuse 26 bzw. 27 zeigen.

Dabei ist in Fig. 2 die Trägerplatte 21, auf deren Vorderseite die Enden von Leitungen 19 für verschiedene Flüssigkeiten und/oder Gase bzw. für elektrische Signale austreten, denen an der zugehörigen feststehenden Trägerplatte 22 eine paßgerechte Anordnung gleicher Leitungsenden entspricht, oben auf dem kastenförmig ausgebildeten Gehäuse 26 mit den Stellantrieben 23 angeordnet, während in Fig. 3 die dortige Trägerplatte 21 mit den Enden der Leitungen 19 zwischen den Stellantrieben 23 in der Vorderfront des quaderförmig ausgebildeten Gehäuses 27 eingesetzt ist. Als Halteelemente für die jeweilige Trägerplatte 21 sind sowohl in Fig. 2 als auch in Fig. 3 jeweils zwei an den seitlichen Enden der Trägerplatte 21 austretende und mit dieser verstellbare Führungsstangen 20 vorgesehen, und als Verstellantrieb dient in beiden Fällen eine Kolben/Zylinder-Anordnung, von der jeweils nur eine mit der Trägerplatte 21 verbundene Kolbenstange 11 und ein den entsprechenden Arbeitskolben für eine hydraulische Vor- bzw. Rückverstellung der Trägerplatte 21 gegenüber dem Gehäuse 26 bzw. 27 aufnehmendes Gehäuse 6 gezeigt sind. Die erfindungsgemäß vorgesehene Verriegelung greift bei kleiner Ausführung der Trägerplatte 21 an der jeweiligen Kolbenstange 11 und bei großer Ausführung der Trägerplatte 21 bevorzugt an den Führungsstangen 20 an, wobei gegebenenfalls auch mehr als zwei Führungsstangen 20 je Trägerplatte 21 und auch mehr als eine Kolbenstange 11 vorgesehen sein können.

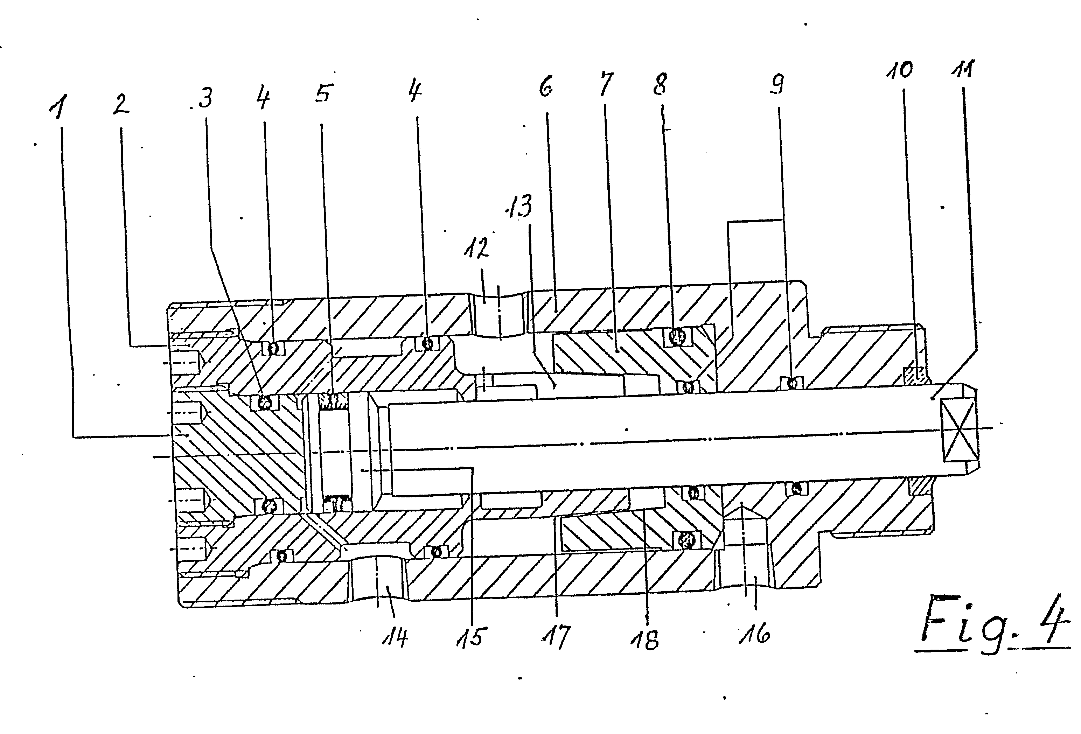

Eine bevorzugte Ausführungsmöglichkeit für den Verstellantrieb mit der Kolbenstange 11 und deren Verriegelung an beliebiger Stelle ihres Hubweges in Gehäuse 6 ist in Fig. 4 dargestellt und soll unter Bezugnahme hierauf näher beschrieben werden. Dabei sei gleich noch darauf hingewiesen, daß der gezeigte Aufbau in analoger Weise auch für eine Verstellung und Verriegelung der Führungsstangen 20 dienen könnte.

Gemäß der Darstellung in Fig. 4 enthält das Gehäuse 6 eine durchgehende zentrale Axialbohrung; darin ist die endseitig in einen

Stellkolben 15 von größerem Durchmesser übergehende Kolbenstange 11 in Richtung ihrer Achse verschiebbar und gegebenenfalls um diese Achse drehbar geführt. Rund um den Austritt der Kolbenstange 11 aus dem Gehäuse 6 ist ein Abstreifring 10 angeordnet, der ein Eindringen von Verunreinigungen in das Gehäuse 6 verhindert. In das dem Austritt für die Kolbenstange 11 abgewandte Ende der Axialbohrung im Gehäuse 6 ist eine hohle Klemmhülse 2 eingeschraubt, und deren innerer Hohlraum wiederum ist an diesem Ende des Gehäuses 6 durch einen ebenfalls eingeschraubten Abschlußstopfen 1 verschlossen, der zugleich einen Endanschlag für die Einfahrbewegung des Stellkolbens 15 und der Kolbenstange 11 im Gehäuse 6 bildet.

Die Klemmhülse 2 weist die Form eines im Außenumfang abgestuften Hohlzylinders auf, der in seinem Inneren ein Teilstück der Kolbenstange 11 und den damit verbundenen Stellkolben 15 aufnimmt und einen Arbeitszylinder für diesen bildet. Als O-Ringe ausgebildete und in entsprechende Ringnuten eingelegte Dichtungen 3, 4 und 5 sorgen für eine Abdichtung an den Berührungsflächen von Gehäuse 6, Klemmhülse 2, Abschlußstopfen 1 und Stellkolben 15 gegen einen Durchtritt von Hydraulikfluid, das als Antriebsmittel für Verstellbewegungen über Hydraulikanschlüsse 12, 14 und 16 und gegebenenfalls anschließende Stichkanäle und -bohrungen zugeführt werden kann.

Die Axialbohrung im Gehäuse 6 ist in ihrer lichten Weite abgestuft, wobei sie im Anschluß an den Abstreifring 10 zunächst die Kolbenstange 11 eng umschließt und sich dann an einer Ringschulter bis zu dem Außendurchmesser der Klemmhülse 2 erweitert, so daß anschließend an die Ringschulter ein Arbeitszylinder für einen Klemmkolben 7 entsteht, der die Form eines Bechers mit der Klemmhülse 2 zugewandter Öffnung aufweist. Zur Abdichtung zwischen Gehäuse 6, Klemmkolben 7 und Kolbenstange 11 gegen einen Durchtritt von Hydraulikfluid sind wiederum als O-Ringe ausgebildete und in entsprechende Ringnuten eingelegte Dichtungen 8 und 9 vorgesehen. An seinem Außenumfang weist der Klemmkolben 7 im wesentlichen Zylinderform auf, während auf seinem Innenumfang einen konische Keilfläche 18 ausgebildet ist, die sich in Richtung auf den Becherboden zu verjüngt, während ihr weiteres Ende der Klemmhülse 2 zugewandt ist und diese in einem Teilbereich übergreift. Die Klemmhülse
2 selbst ist im Anschluß an ihr in das Gehäuse 6 eingeschraubtes
Ende zunächst außen als Zylinder mit später unter Durchmesserverkleinerung abgestufter Mantelfläche ausgeführt und schließlich im
letzten Drittel ihrer Erstreckung auf den Klemmkolben 7 zu durch
Schlitze 13 mit achsparallelem Verlauf in mehrere ebenfalls achsparallele Zinken aufgespalten. An ihrem Außenumfang weist die Klemmhülse 2 im Bereich ihrer Überlappung durch den Klemmkolben 7 statt
einer Zylindermantelfläche eine konische Keilfläche 17 auf, die in
ihrer Neigung gegen die Achse der Kolbenstange 11 mit der Neigung
der Keilfläche 18 am Innenumfang des Klemmkolbens 7 korrespondiert,
so daß beim Auffahren des Klemmkolbens 7 auf die Klemmhülse 2 eine
großflächige Berührung entlang der Keilflächen 17 und 18 erreicht
werden kann, die im Verein mit einer entsprechenden Auslegung der
Reibbeiwerte für das Material und die Oberflächenstruktur von Klemmhülse 2 und Klemmkolben 7 eine Keilselbsthemmung sicherstellt, die
erst durch eine entsprechende Rückverstellung des Klemmkolbens 7 von
der Klemmhülse 2 wieder aufgehoben werden kann. Das so bewirkte Festklemmen der Klemmhülse 2 auf der Kolbenstange 11 ist unabhängig von
deren Hubstellung im Gehäuse 6, da es allein durch die Stellung des
Klemmkolbens 7 relativ zur Klemmhülse 2 bestimmt wird.

Im praktischen Betrieb des dargestellten Ausführungsbeispiels
wird zunächst bei in der in der Zeichnung rechten Endlage befindlichem Klemmkolben 7 und damit von der Klemmhülse 2 losgelöster
Stellung des Klemmkolbens 7 über den Hydraulikanschluß 14 Hydraulikfluid unter Druck zugeführt, bis unter Verschiebung und gegebenenfalls Verdrehung von Stellkolben 15 und Kolbenstange 11 entlang bzw.
um deren Achse eine gewünschte Lage der Kolbenstange 11 erreicht ist.
Sodann wird über den Hydraulikanschluß 16 Hydraulikfluid unter Druck
zugeführt, das den Klemmkolben 7 nach links verschiebt und die Keilfläche 18 auf seinem Innenumfang auf die Keilfläche 17 auf dem Außenumfang der Klemmhülse 2 auflaufen läßt. Dadurch werden die durch
die Schlitze 13 gebildeten Zinken an der Klemmhülse 2 nach innen an die Kolbenstange 11 angepreßt und halten diese und damit auch die
Trägerplatte 21 in der erreichten Lage fest, wobei die Arretierung
dank der Keilselbsthemmung zwischen den Keilflächen 17 und 18 auch
dann noch erhalten bleibt, wenn am Hydraulikanschluß 16 kein Druck
mehr herrscht. Damit werden die Kolbenstange 11 und die Trägerplatte 21 auf jeden sicher in der eingestellten Lage festgehalten.
Wenn anschließend eine Rückverstellung der Trägerplatte 21 unter
deren Trennung von der zugehörigen feststehenden Trägerplatte 22
gewünscht wird, kann über den Hydraulikanschluß 12 Hydraulikfluid
unter Druck eingespeist werden, das zunächst den Klemmkolben 7 nach
rechts verschiebt und damit die Klemmwirkung für die Kolbenstange 11
über die Klemmhülse 2 aufhebt, so daß die Trägerplatte 21 über die
Kolbenstange 11 durch das über den Hydraulikanschluß 12 zugeführte
Hydraulikfluid zurückverstellt werden kann.

Patentansprüche
■■■■■■■■■■■■■■

1. Mehrfachkupplungsanordnung zum gleichzeitigen Verbinden bzw.
   Trennen der Enden einer Vielzahl von einander zugeordneten
   elektrischen und/oder Flüssigkeit und/oder Gas führenden
   Leitungen an zwei beweglichen Maschinenteilen mit zwei einander
   gegenüberstehenden Trägerplatten, die jede die Enden jeweils
   einer Leitung aller miteinander zu verbindenden Leitungspaare
   in paßgerechter gegenseitiger Zuordnung enthalten und von denen
   wenigstens eine relativ zur anderen auf wenigstens zwei Führungsstangen durch wenigstens einen Stellkolben senkrecht zu ihrer
   Ebene axial verschiebbar geführt ist, dadurch gekennzeichnet,
   daß entweder am Stellkolben (15) bzw. an seiner Kolbenstange (11)
   oder an den Führungsstangen (20) eine hydraulisch betätigbare
   bzw. lösbare und an beliebiger Stelle des axialen Verstellweges
   für die verschiebbare Trägerplatte (21) aktivierbare Verriegelung (2, 7) zum zeitweiligen Festlegen der verschiebbaren Trägerplatte (21) relativ zur feststehenden Trägerplatte (22) vorgesehen ist.

2. Anordnung nach Anspruch 1, dadurch gekennzeichnet, daß die Verriegelung (2, 7) wenigstens zwei relativ zueinander verstellbare
   und nach Auffahren aufeinander durch Selbsthemmung zusammenhaltende Keilflächen (17, 18) aufweist.

3. Anordnung nach Anspruch 2, dadurch gekennzeichnet, daß die Keilflächen (17, 18) an einer auf wenigstens einem Teilstück ihrer
   Länge geschlitzten Klemmhülse (2) einerseits bzw. an einem
   relativ dazu verstellbaren Klemmkolben (7) andererseits ausgebildet sind.

4. Anordnung nach Anspruch 3, dadurch gekennzeichnet, daß der Klemmkolben (7) die Klemmhülse (2) von außen umgreift.

5. Anordnung nach Anspruch 3 oder 4, dadurch gekennzeichnet, daß der Klemmkolben (7) ein die jeweilige Stange (11 oder 20) umschließender Hohlkolben ist, der an seinem Innenumfang die konisch ausgebildete erste Keilfläche (18) aufweist, die mit der ebenfalls konisch ausgebildeten zweiten Keilfläche (17) korrespondiert, die ihrerseits außen auf der die jeweilige Stange (11 oder 20) ebenfalls und mit axialem Abstand vom Klemmkolben (7) umschließenden und wenigstens in einem Endbereich ihrer Länge geschlitzten Klemmhülse (2) an deren geschlitztem Ende vorgesehen ist, wobei das Festklemmen der jeweiligen Stange (11 oder 20) unmittelbar durch Auffahren der ersten Keilfläche (18) am Klemmkolben (7) auf die zweite Keilfläche (17) an der Klemmhülse (2) erfolgt.

6. Anordnung nach einem der Ansprüche 3 bis 5, dadurch gekennzeichnet, daß die Klemmhülse (2) ein anschließend an sein eines Ende auf etwa einem Drittel seiner Länge durch axial verlaufende Schlitze (13) in mehrere zueinander parallele Zinken unterteilter und im Bereich dieses Endes außen zur Ausbildung der zweiten Keilfläche (17) konisch verjüngter Hohlzylinder ist.

7. Anordnung nach einem der Ansprüche 3 bis 6, dadurch gekennzeichnet, daß die Klemmhülse (2) an ihrem dem Klemmkolben (7) abgewandten Ende in einem die jeweilige Stange (11) umgebenden Gehäuse (6) festgelegt ist.

8. Anordnung nach einem der Ansprüche 3 bis 7, dadurch gekennzeichnet, daß der Klemmkolben (7) die Form eines mit seiner Öffnung der Klemmhülse (2) zugewandten Bechers mit zylindrischem Außenumfang und sich zum Becherboden hin konisch verjüngendem Innenumfang aufweist .

9. Anordnung nach einem der Ansprüche 3 bis 8, dadurch gekennzeichnet, daß die Keilflächen (17, 18) an der Klemmhülse (2) und am Klemmkolben (7) sowohl in ihrer jeweiligen Neigung zur Verstellrichtung des Klemmkolbens (7) als auch in den Reibbeiwerten ihres Materials bzw. ihrer Oberflächenstruktur auf eine Keilselbsthemmung nach dem Auffahren des Klemmkolbens (7) auf die Klemmhülse (2) ausgelegt sind.

10. Anordnung nach einem der Ansprüche 3 bis 9 mit einem Hydraulikantrieb für den Stellkolben, dadurch gekennzeichnet, daß ein
gemeinsamer Hydraulikanschluß (12) für eine Zufuhr von Hydraulikfluid unter Druck zum Lösen des Klemmkolbens (7) von der Klemmhülse (2) und zu anschließender Verstellung des Stellkolbens (15)
vorgesehen ist.

11. Anordnung nach einem der Ansprüche 3 bis 10, dadurch gekennzeichnet, daß der Klemmkolben (7) das geschlitzte Ende der Klemmhülse (2)
bereits in seiner von dieser am weitesten entfernten Endstellung
mit geringem Spiel umgreift.

12. Anordnung nach einem der Ansprüche 1 bis 11, dadurch gekennzeichnet, daß die Verriegelung (2, 7) in ihrem hydraulischen Antrieb
mit der Verstellung der verschiebbaren Trägerplatte (21) in der
Weise kombiniert ist, daß über ein und denselben Hydraulikanschluß (12) Druckfluid für das Lösen der Verriegelung (2, 7) und
für eine anschließende Verstellung der verschiebbaren Trägerplatte (21) von der feststehenden Trägerplatte (22) weg zugeführt wird.

13. Anordnung nach einem der Ansprüche 1 bis 12, dadurch gekennzeichnet, daß die verschiebbare Trägerplatte (21) in den Aufbau eines
hydraulischen Stellantriebs (23) zum Festlegen der beweglichen
Maschinenteile (24, 25) integriert ist.

14. Anordnung nach Anspruch 13, dadurch gekennzeichnet, daß der Stellkolben (15) mit seiner Kolbenstange (11) und die Führungsstangen
(20) auf einem den Stellantrieb (23) aufnehmenden kastenförmigen
Gehäuse (26) aufgesetzt sind (Fig. 2).

15. Anordnung nach Anspruch 13, dadurch gekennzeichnet, daß der Stellkolben (15) mit seiner Kolbenstange (11) und die Führungsstangen
(20) in ein quaderförmiges Gehäuse (27) für die Aufnahme des
Stellantriebs (23) im Anschluß daran eingesetzt sind (Fig. 3).

# Fig.1

0205093

_Fig. 2_

*Fig.3*

0205093

Fig. 4